Europäisches Patentamt

European Patent Office

Office européen des brevets

(11) Publication number: **0 482 803 A1**

# EUROPEAN PATENT APPLICATION

(21) Application number: **91309376.1**

(22) Date of filing: **11.10.91**

(51) Int. Cl.5: **F16D 55/14**

(30) Priority: **24.10.90 GB 9023105**

(43) Date of publication of application:
**29.04.92 Bulletin 92/18**

(84) Designated Contracting States:
**DE ES FR GB IT**

(71) Applicant: **LUCAS INDUSTRIES PUBLIC
LIMITED COMPANY
Brueton House, New Road**

Solihull, West Midlands B91 3TX(GB)

(72) Inventor: **Price, Anthony George
14 Meadow Lane, Croesyceiliog
Cwmbran, Gwent NP44 2EY, Wales(GB)**

(74) Representative: **Spall, Christopher John et al
BARKER, BRETTELL & DUNCAN 138 Hagley
Road
Edgbaston Birmingham B16 9PW(GB)**

(54) **Brakes.**

(57) A compound self-energising disc brake has a radially inner pair of pressure plates comprising a driven plate (7) splined to a shaft (5) to be braked and an input plate (9) held from the driven plate by a series of angularly spaced balls (10) received in complementary pairs of recesses (11, 12) in the adjacent faces of the inner plates (7, 9), the balls (10) and recesses (11, 12) providing self-energising camming means between the inner plates. The input plate (9) has a series of splines (24, 27) at its outer peripheral edge upon which a pair of outer friction discs (25, 26) are splined. An outer, primary, pair of pressure plates (30, 31) surround the inner plates (7, 9) and are disposed between the outer friction discs (25, 26). The primary plates (30, 31) also have a series of balls (36) received in recesses (34, 35), the balls (36) and recesses (34, 35) being provided in an anti-servo arrangement so that the actuation force applied to the plates (30, 31) to actuate the primary brake acts in the opposite sense to the drag experienced by the primary plates due to rotation of the outer friction discs (25, 26). Although an anti-servo brake has, on its own, poor performance it is found that when used as the primary brake for a compound brake it has advantages.

Fig. 1.

This invention relates to brake assemblies of the compound kind and is especially, but not exclusively, suited for use with a self-energising compound brake in which a pair of pressure plates is located between axially spaced braking surfaces provided in a housing, self-energising camming means is provided between the plates and comprises balls or rollers located in co-operating oppositely inclined angularly spaced recesses provided in adjacent faces of the pressure plates, relative angular movement between the plates causing the plates to move axially apart and into engagement with the braking surfaces due to the balls or rollers riding up ramps defined by the edges of the recesses, and in which one of the plates comprises a driven plate coupled to a rotatable shaft of the brake assembly so as to be axially movable with respect to the shaft but angularly immovable relative thereto, and the other plate comprises an input plate carried from the driven plate by means of the camming means, the compound brake comprising primary braking means provided in the housing to retard rotation of the input plate and a secondary brake formed by the self-energising engagement of the pressure plates with the braking surfaces, actuation of the secondary brake being effected by application of the primary braking means to retard the input plate and so cause relative angular movement between the pressure plates causing them to engage the braking surfaces whereby to initiate a self-energising braking action by the secondary brake. Such brake assemblies will hereinafter be referred to as being "of the kind set forth".

An example of a brake assembly of the kind set forth is shown in U.S. Patent No. 3 403 753 which discloses such a brake having a servo plate with an axial flange at its outer periphery, and a primary braking means comprising a band brake for application to the axial flange.

Brakes such as that shown in U.S. 3 403 753 either need complicated actuation mechanisms for their bands, or have to tolerate scuffing and wear of the band as a result of movement of the axial flange in an axial direction during brake actuation. They are also characterised by their instability, having a high servo factor band brake in series with a high factor ball and ramp brake.

A compound ball brake typically comprises a primary brake to actuate a secondary ball brake. The primary brake retards the rotating secondary brake which is then energised into braking face engagement by a vehicle's kinetic or potential energy. Input PV (input force X input distance travelled) is supplied only to the primary brake. The overall brake torque may be increased for a given input PV by the simple expedient of adding further secondary friction discs.

A conventional compound ball brake normally uses a non-servo brake as its primary brake since any servo content in the primary will be compounded in the secondary brake to produce a highly sensitive and unstable brake. Annular piston brakes are usually employed as the primary, owing to the added complexity and the inefficiency of a non-servo ball brake for that purpose.

An example of a self-energising compound brake (a secondary self-energising brake actuated by a primary brake) is disclosed in EP 0 385 744 which is concerned with a disc brake having a first pressure plate of small diameter keyed to a shaft to be braked and a second pressure plate of larger diameter carried from the first pressure plate by angularly spaced camming balls received in co-operating pairs of recesses. A spot brake (primary brake) acts upon the outer peripheral edge portion of the larger plate (the input plate) to cause servo operation of the secondary brake.

The present invention aims to provide an alternative compound brake.

According to the invention a compound brake comprises an anti-servo primary brake, actuator means adapted to actuate the primary brake, and a secondary brake which is actuated by the primary brake and which is adapted to brake a shaft to be braked.

It is surprisingly found that the undesirable qualities of an anti-servo brake are in fact acceptable when the anti-servo brake is used as a primary brake for a self-energising secondary brake, and that hitherto unappreciated advantages of an anti-servo brake make its use as a primary brake in a compound brake desirable.

Preferably the secondary brake is self-energising. We believe that it will be very difficult to make an anti-servo compound brake with satisfactory performance if the secondary brake is not self-energising, but it may just be possible.

This enables a compound brake of overall acceptable performance to be more easily achieved.

Preferably the primary brake is a disc brake, and may be an internally expanding disc brake. The primary brake could be a shoe brake, such as a two-trailing shoe brake.

Preferably the primary brake is anti-servo for forward and reverse directions of rotation of the shaft to be braked.

Preferably the compound brake is of the kind set forth.

An outer friction disc may be keyed to the outer peripheral edge of the input plate, anti-servo brake actuation means being provided to brake the outer friction discs to retard the input plate. Alternatively the anti-servo actuation means act directly on a portion of the input plate, which may extend beyond the radial peripheral edge of the driven plate.

The brake actuation means may comprise an outer pressure plate provided with anti-servo camming means.

A pair of outer pressure plates may be provided, anti-servo camming means, such as balls in recesses, being provided between them. The pairs of outer pressure plates may be provided axially between a pair of outer friction discs each of which is keyed to the input plate.

The input plate may have an axial flange at its outer peripheral edge to which the or each outer friction disc may be keyed. The flange of the input plate may define a recess in which the driven plate is received. The driven plate may be dished so that its radially inner region which is keyed to the shaft to be braked is in a different plane to the radially outer region of the plate at which the camming means between the input and driven plates are provided. The axial step or kink in the driven plate may be generally half of the axial thickness of the driven plate. The radially inner region of the driven plate which is keyed to the shaft to be braked is preferably generally disposed in the same plane as the centre plane of the camming means. When the camming means comprises balls or other rolling bodies the central planes of the inner region and of the rolling bodies preferably substantially coincide.

According to a second aspect of the invention a disc brake comprises a pressure plate having a radially inner region keyed to a shaft to be braked and a radially outer region in a plane axially spaced from the plane of the inner region.

Preferably the keying of the plate to the shaft is at the central plane of camming means associated with the pressure plate.

Preferably a pair of pressure plates is provided having co-operating opposed recesses in which rolling bodies are received, the inner region of said pressure plate being substantially in the same plane as the central plane of the rolling bodies.

According to the third aspect the invention comprises a dished pressure plate for use in a brake in accordance with the first or second aspects of the invention.

An embodiment of the invention will now be described by way of example only with reference to the accompanying drawings of which:-

Figure 1 shows a section through a disc brake;

Figures 2 and 3 show in plan and bottom views the brake of Figure 1 actuated when an axle to be braked is rotating in a forward direction.

Figures 4 and 5 show in plan and bottom views the brake of Figure 1 actuated when the axle to be braked is rotating in a reverse direction; and

Figure 6 illustrates a principle associated with the invention.

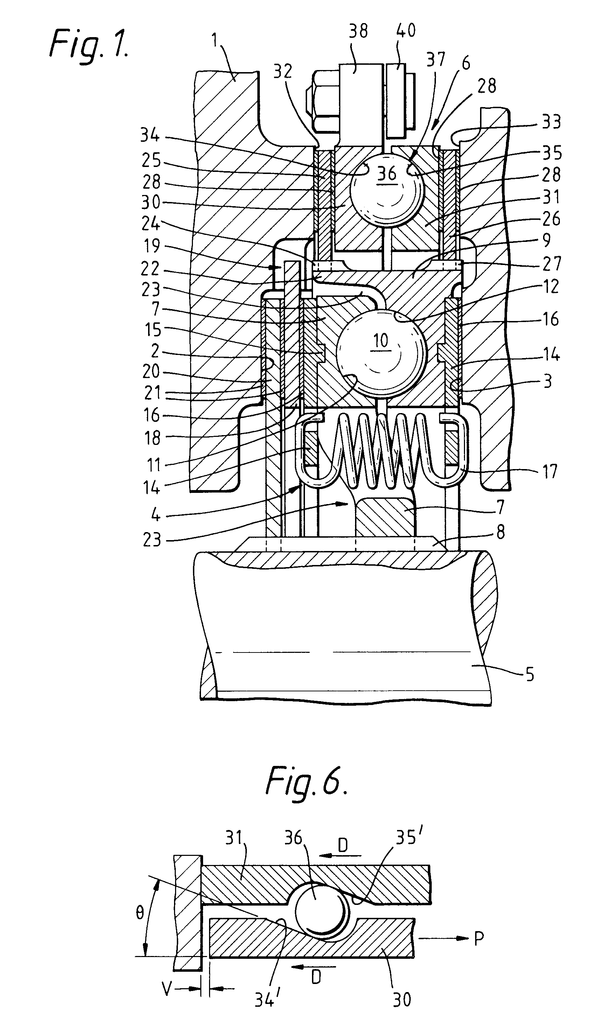

The brake illustrated in Figures 1 to 5 of the drawings comprises a housing 1 having opposed annular radial braking surfaces 2 and 3, a pressure plate assembly 4 located between the braking surfaces and adapted to brake a rotatable axle shaft 5, and primary braking means 6 to initiate actuation of the brake.

The pressure plate assembly 4 comprises a driven servo plate 7, which is keyed to the axle shaft 5 through splines 8, an input plate 9 carried from the driven plate 7 through a series of balls 10 which are received in pairs of co-operating angularly spaced recesses 11 and 12 provided in the adjacent faces of the pressure plates. The recesses 11 and 12 have ramps 11', 12' (not shown) arranged to provide a self-energising action, in a known manner, for both directions of rotation of the shaft 5. The plates 7 and 9 carry surface discs 14 of sheet metal secured to the plates by studs 15. The surface discs 14 carry linings of friction material 16. Brake release tension return springs 17 are provided to urge the pressure plates 7 and 9 towards each other. The springs 17 have opposed inturned ends which engage in holes provided in the surface discs 14.

A stator disc 18, comprising a relatively stationary braking surface, is provided between the lining 16 of the surface disc of the driven plate 7 and the braking surface 2 of the housing. The stator disc 18 is keyed to the housing against rotation by keying means 19 provided at its periphery, but is axially slidable in the housing. A friction disc 20 keyed to the shaft 5 via splines 8 is axially interposed between the stator disc 18 and the braking surface 2. The disc 20 carries linings of friction material 21 on each side for respective engagement with the braking surface 2 and the stator disc 18.

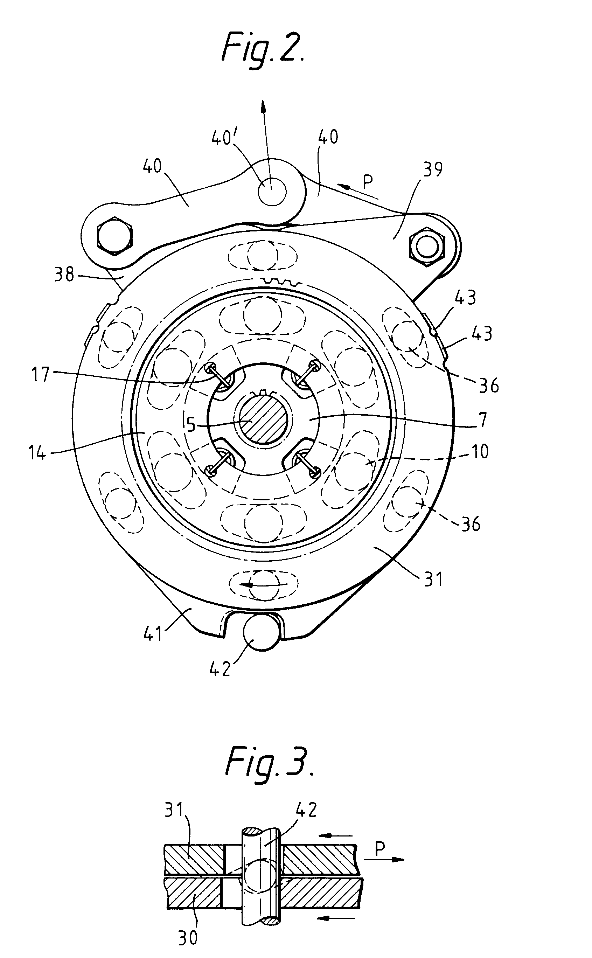

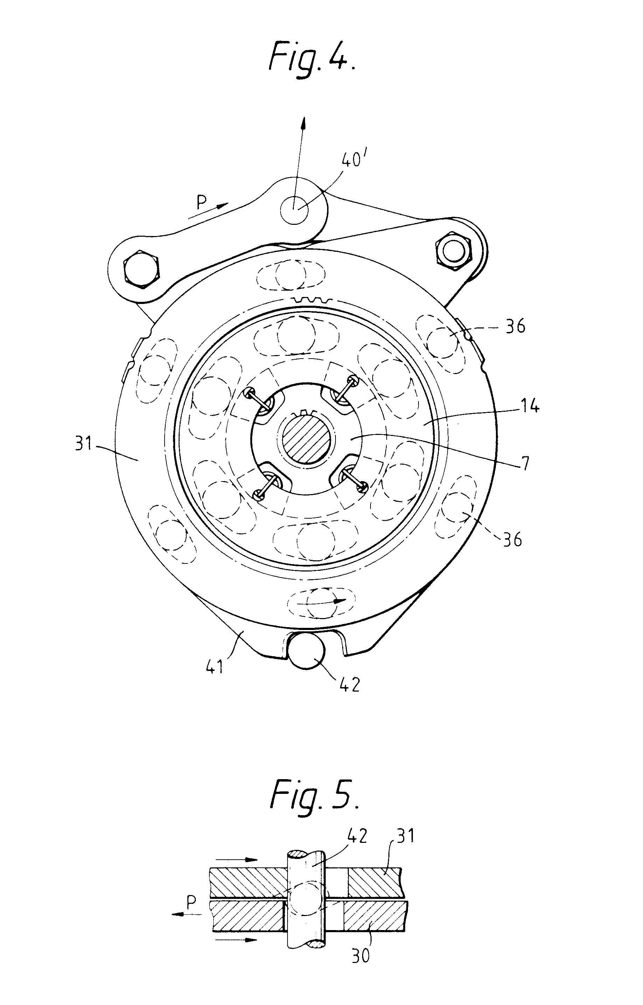

The input plate 9 has an axially extending peripheral flange 22 which extends around the outer peripheral edge of the driven plate 7 and defines a recess 23 in which the plate 7 is received. The radially outer surface of the flange 22 has a spline 24 to which an outer friction discs 25 is keyed. A second outer friction disc is keyed to another axially spaced region of the outer peripheral edge of the input plate 7 by another spline 27. The two outer friction discs 25 and 26 each carry friction linings 28 on each of their radial faces. A pair of primary pressure plates 30 and 31 are provided between the outer friction discs 25 and 26, and the two outer friction discs 25 and 26 are provided between opposed radially outer braking surfaces 32 and 33 of the housing 1. The primary pressure plates 30 and 31 extend around the plates 7 and 9 and are provided with pairs of opposed inclined recesses 34 and 35 in which balls 36 are retained. The recesses 34 and 35 and the balls 36 comprise camming means 37 for the primary plates 30 and 31. Outer plate 30 has a radial actuation lug 38, and outer plate 31 has a similar, angularly spaced radial actuation lug 39 (shown in Figures 2 and 4). Toggle links 40 connect the actuation lugs 38 and 39 to a pull rod or cable (not shown) at a pivot point 40. The pull rod or cable is actuated by an add-on hydraulic actuator unit (not shown) which is bolted on to the housing 1 and fed from a hydraulic power source (not shown).

The outer plates 30 and 31 have radially projecting stop-abutment lugs 41 (shown in Figure 2) at a position diametrically opposed to their actuator lugs 38 and 39. A stop abutment pin 42 is provided in the housing 1 and co-operates with the lugs 41 to prevent angular movement of the plates 30 and 31 beyond a predetermined extent. The plates 30 and 31 also have angularly spaced guide pilot projections 43 at their outer peripheral edges which co-operate with complementary pilot lugs (not shown) provided on the housing 1 to centre the plates 30 and 31 relative to the shaft 5. The lugs 41 also incorporate guide pilot projections which co-operate with the pin 42 and assist in centering the outer plates.

The recess 34 and 35 of the outer plates 30 and 31 have ramps 34' and 35' inclined relative to planes perpendicular to the shaft 5 such that engagement of the outer friction discs 25 and 26 with the outer pressure plates 30 and 31 when the discs 25 and 26 are rotating in a forward direction (the direction in which they rotate when the shaft 5 is rotating in a direction such that a vehicle in which it is provided is travelling forwards) tends to urge the balls 36 down the ramps 36' towards the deeper ends of the recesses, as opposed to the shallower ends of the recesses. This is in the opposite sense to a servo direction; an anti-servo direction.

The actuation lugs 38 are arranged to be pulled together to actuate the primary brake in a direction such that the outer, primary, plates 30 and 31 move angularly in the opposite sense to the forward angular-direction of rotation of the discs 25 and 26.

When the brake is actuated a hydraulic cylinder (not shown) pulls on a pull-rod or cable (also not shown) which pulls the pivot point 40' generally radially outwards. This moves the two primary, outer, pressure plates 30 and 31 angularly in opposite directions and this causes the balls 36 to ride up the ramps 34' and 35' and move the plates 30 and 31 axially apart and into engagement with friction discs 25 and 26 which are in turn urged against the surfaces 32 and 33. When the vehicle to which the brake is fitted is moving in a forwards direction the outer friction discs 25 and 26 are rotating in the opposite angular sense to that in which the plates 30 and 31 are moved to actuate the primary brake 6. The plates 30 and 31 are initially carried around with the friction discs 25 and 26 until one of their lugs 41 hits pin 42 to arrest angular movement of the plates 30 and 31. In a conventional servo-brake a self-energising action would then occur, but in this anti-servo compound brake an anti-servo effect is produced.

When the primary plates 30 and 31 are moved axially apart they urge the friction discs 25 and 26 against their respective braking surfaces 32 and 33 which brakes the discs 25 and 26, slowing their angular speed. The discs 25 and 26 in turn slow the input pressure plate 9 since they are splined to its outer peripheral edge. When the input plate 9 is braked relative to the driven plate 7 relative rotation between the two plates 7 and 9 occurs and the balls 10 ride up the ramps 11' and 12' to the shallow ends of the recess 11 and 12 and force the plates 7 and 9 axially apart, urging the surface plates 14 against their respective relatively stationary braking surfaces 3 and stator 18 in a conventional self-energising manner.

The recesses 34 and 35 of the primary pressure plates 30 and 31 are so arranged that they also co-operate with the balls 36 in an anti-servo manner when the shaft 5 is rotating in its reverse direction, as well as when it is rotating in its forward direction. This avoids the brake having considerably different forward to reverse braking performance characteristics.

One convenient way of achieving anti-servo in both directions of rotation of the outer friction discs is to ensure that the camming recesses in the plates are machined in the opposite sense to that in which they would be if the plates were conventional servo plates. Thus the recesses 34, 35 in plates 30 and 31 are inclined in the opposite sense to the recesses 11 and 12 in plates 7 and 9. One possible alternative might be to ensure that the one of the lugs 41 of the outer plates which co-operates with the pin 42 to arrest angular movement of the plates 30 and 31 is on the opposite pressure plate to that which it would be for a servo arrangement. Thus the recesses and balls could be as found in a servo arrangement, but the arresting lug 41 which engages the pin 42 would be on the opposite plate 30, 31 to that which it would be for a servo action. We are not yet entirely sure that this last possibility would work.

A mechanical actuator mechanism is also connected to the pull-rod or cable for emergency or parking brake actuation. Any suitable means may be used in modified embodiments to actuate the primary brake, for example a wedge actuator.

The invention described may be employed in multi plate disc brakes, with more than one friction disc to either side of the secondary pressure plates 7 and 9 if it is desired to increase the performance of the brake.

An "anti-servo" actuator input mechanism where the actuator input force opposes the drag force generated upon brake actuation requires a much greater input effort to generate a given brake torque than does a servo brake of the same ramp angle, or even non-servo, brake of similar proportions and efficiency.

Brake performance may be best expressed by the ratio of brake torque 'T' to the product of brake input effort and travel 'PV', that is to say T/PV. The higher this ratio, the better the brake performance. It can be shown that for a given brake torque:

$$\text{Anti-servo PV} = \text{Non-servo PV} \times \frac{\tan \theta + \mu}{\tan \theta}$$

Where

$\theta$ = Effective ball pocket ramp angle
and
$\mu$ = Lined friction disc co-efficient of friction.

The value of

$$\frac{\tan \theta + \mu}{\tan \theta}$$

can be reduce by increasing the ramp angle $\theta$ for a given value of $\mu$.

For example if $\mu$ = 0.13 then if $\theta$ = 10° ;

$$\frac{\tan \theta + \mu}{\tan \theta} = 1.737$$

and if $\theta$ = 30° ;

$$\frac{\tan \theta + \mu}{\tan \theta}$$

= 1.225

At about $\theta$ = 30° the anti-servo brake substantially matches the performance of a non-servo ball brake, which is inherently inefficient in its simplest form. In other respects, the anti-servo brake has advantages over a non-servo brake.

An anti-servo brake has lower hysteresis than a non-servo brake, and in an oil immersed application parasitic drag will wind the brake off. There is thus no need for brake release springs on the primary pressure plates 30 and 31. Furthermore, the anti-servo brake shows lower sensitivity to lining friction variation, and has a lower threshold. Again no actuator return springs are necessary.

An anti-servo brake also has fewer parts than a non-servo brake since there are no intermediate stator discs interposed between the pressure plates and the friction disc to eliminate servo action and no extra return springs. There is no need to provide expensive low-friction coatings between the intermediate discs and the pressure plates.

An anti-servo brake is more compact than a non-servo brake because no intermediate stator plates are required between the pressure plates and the friction discs.

5

A further advantage of an anti-servo brake is that it has positive adjustment and positive follow-up. The pressure plates of an anti-servo internally expanding disc brake are urged back towards their unactuated position by the drag which they experience from the adjacent rotating friction discs.

The brake shown in the embodiment described has the above advantages for its anti-servo primary brake, making that part of the brake simple and cheap to produce, yet retains an acceptable performance since the primary brake does not need particularly good performance in order to actuate the secondary brake, and it is the secondary brake which provides most of the effective performance of the overall compound brake.

The simple primary brake can easily accommodate a mechanical parking brake attachment and an add-on hydraulic actuator can readily be attached to existing housings. This can avoid the need to completely re-tool a production facility.

**Claims**

1. A compound brake comprising a primary brake (6), actuator means adapted to actuate the primary brake, and a secondary brake which is actuated by the primary brake and which is adapted to brake a shaft (5) to be braked, characterised in that the primary brake is an anti-servo brake.

2. A compound brake according to claim 1, characterised in that a pair of pressure plates are located between axially spaced braking surfaces (2,3) provided in a housing (1), self-energising camming means are provided between the plates and comprise balls (10) or rollers located in co-operating oppositely inclined angularly spaced recesses (11,12) provided in adjacent faces of the pressure plates, relative angular movement between the plates causing the plates to move axially apart and into engagement with the braking surfaces (2,3) due to the balls or rollers (10) riding up ramps (11',12') defined by the edges of the recesses (11,12), in which one of the plates comprises a driven plate (7) coupled to the rotatable shaft (5) of the brake assembly (4) so as to be axially movable with respect to the shaft but angularly immovable relative thereto, and the other plate comprises an input plate (9) carried from the driven plate (7) by means of the camming means, and primary braking means is provided in the housing (1) to retard rotation of the input plate (9) and the secondary brake is formed by the self-energising engagement of the pressure plates with the braking surfaces (2,3), actuation of the secondary brake being effected by application of the primary braking means to retard the input plate (9) and so cause relative angular movement between the pressure plates causing them to engage the braking surfaces whereby to initiate a self-energising braking action by the secondary brake.

3. A compound brake according to claim 1 or claim 2, characterised in that the actuator means comprises an outer pressure plate (30) provided with anti-servo camming means .

4. A compound brake according to any of claims 1 to 3, characterised in that the actuator means comprises a pair of outer pressure plates (30,31), anti-servo camming means, such as balls (36) in recesses (34,35), being provided between them.

5. A compound brake according to claim 2 or any claim dependent therefrom, characterised in that the driven plate (7) is dished so that its radially inner region which is keyed to the shaft (5) to be braked is in a different plane to the radially outer region of the plate (7) at which the camming means between the input and driven plates is provided.

6. A compound braked according to claim 5, characterised in that when the camming means comprises balls (36) or rolling bodies, the central planes of the inner region and of the rolling bodies coincide.

7. A disc brake characterised in that it comprises a pressure plate (7) having a radially inner region keyed to a shaft (5) to be braked and a radially outer region in a plane axially spaced from the plane of the inner region.

8. A disc brake according to claim 7, characterised in that the keying of the plate (7) to the shaft (5) is at the central plane of a camming means (10) associated with the pressure plate.

6

9. A disc brake according to claim 7 or claim 8, characterised in that a pair of pressure plates (7;9) is provided having co-operating opposed recesses in which rolling bodies (10) are received, the inner region of the said pressure plate (7) being substantially in the same plane as the central plane of the rolling bodies (10).

10. A dished pressure plate (7) for use in a brake in accordance with any previous claim.

*Fig.1.*

*Fig.6.*

## Fig. 2.

## Fig. 3.

# Fig. 4.

# Fig. 5.

**European**
**Patent Office**

**EUROPEAN SEARCH**
**REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 361 864 (LUCAS INDUSTRIES)<br>* the whole document * *<br>– – – | 1,7 | F 16 D 55/14 |
| D,A | EP-A-0 385 744 (LUCAS INDUSTRIES)<br>* the whole document * *<br>– – – | 1,7 | |
| D,A | US-A-3 403 753 (HOOTEN)<br>– – – – – | | |

|  | TECHNICAL FIELDS SEARCHED (Int. Cl.5) |
|---|---|
| | F 16 D |

The present search report has been drawn up for all claims

| Place of search | Date of completion of search | Examiner |
|---|---|---|
| Berlin | 27 January 92 | LUDWIG H J |

CATEGORY OF CITED DOCUMENTS
X : particularly relevant if taken alone
Y : particularly relevant if combined with another
　document of the same catagory
A : technological background
O : non-written disclosure
P : intermediate document
T : theory or principle underlying the invention

E : earlier patent document, but published on, or after
　the filing date
D : document cited in the application
L : document cited for other reasons

&: member of the same patent family, corresponding
　document